# EUROPEAN PATENT SPECIFICATION

(11) **EP 2 791 046 B1**
(45) Date of publication and mention of the grant of the patent: **05.02.2020**
(21) Application number: 12816138.7
(22) Date of filing: 04.12.2012
(51) Int. Cl.: B67D 1/08, B67D 7/34

(54) **METAL CONTAINER WITH RFID TAG FOR CONTAINING GAS**
METALLBEHÄLTER MIT RFID-ETIKETT FÜR GAS
RÉCIPIENT ET MACHINE UTILISANT CE RÉCIPIENT

(30) Priority: 13.12.2011 IL 21692911; 14.12.2011 US 201161570673 P
(43) Date of publication of application: 22.10.2014
(73) Proprietor: Strauss Water Ltd., 49517 Petach Tikva (IL)
(72) Inventor: WILDER, Haim, 43555 Raanana (IL)
(74) Representative: Boult Wade Tennant LLP
(86) International application number: PCT/IL2012/050499
(87) International publication number: WO 2013/088435

(56) References cited:
- EP-A1- 2 284 433
- EP-A2- 0 586 083
- WO-A2-2007/057847
- DE-A1-102007 044 560
- GB-A- 2 288 103
- US-A1- 2008 084 306
- US-A1- 2008 110 774

## Description

### FIELD OF THE INVENTION

This invention relates to a container containing a fluid, such as pressurized gas, and a machine with a receptacle for utilizing such container. A particular, but not limiting, example of such container is one containing pressurized carbon dioxide (CO₂) and a machine for preparing a carbonated drink utilizing it.

### BACKGROUND OF THE INVENTION

RFID (radio-frequency identification) elements are commonly used for labeling and identification of goods. Such RFID elements are used to store data relating to said goods, such as manufacturing data, shipping information, authenticity identification, etc. The RFID element is usually passive, namely, such that is unable to actively transmit data, and therefore requires the use of an appropriate external de-coder (or reader) enabling reading of the information stored on the RFID element. However, other arrangements are known, in which the RFID element also comprises an antenna and an energy source, such as a battery, enabling active transmission of data from the RFID to the reading device (such as those described in WO 2005/111961).

In most cases, the RFID element is in the form of a label, or a tag, which can be removably adhered to an external surface of an object (as described, for example, in US 7,868,765). These labels, however, are prone to forgery, as they are easily accessible and replaced.

Other arrangements provide an RFID element embedded in a single point within the object side-wall (as described, for example, in US 2008/0012687 and WO 2011/046631). Such labeling or embedding does not facilitate usage of simple automatic reading equipment, as proper reading of the data on the label requires accurate positioning of the RFID element with respect to the reading device. This problem is of enhanced significance when the object bearing the label is a replaceable element within an elaborate system, based on user-operation. In such cases, a solution providing fail-proof identification is required, namely, that the positioning of the RFID element and reader will not require intervention or adjustment by the user.

DE102007044560 concerns a transport and storage unit with a transponder identification unit for identification of goods or other objects that can be arranged, transported and/or stored.

### SUMMARY OF THE INVENTION

The current disclosure provides a metal container according to claim 1. Such a container contains a fluid and is for replaceable incorporation into a machine in which the fluid is utilized. A particular, non-limiting example is a metal container containing pressurized CO₂, which is incorporated into a machine for preparation of a carbonated drink, typically in a unit quantity. The container is of the kind intended for replacement, once the fluid in it has been exhausted.

The container of the present disclosure comprises an identification module, which is fitted at the base of the container. This identification module comprises an RFID element that stores data relating to identifiers of the container that can be transmitted, via the RF transceiver circuitry of said element to communicate such data to an appropriate RF communication module properly positioned within the machine. In this manner, the machine processor, included within the machine, can receive container-related identifiers, such as, but not limited to, container authenticity data, identifiers of the fluid-filling facility and of the extent of utilization of fluid within the container.

Thus, the present disclosure provides a metal container containing a fluid for replaceable incorporation into a machine in which the fluid is utilized. The container has a base with an identification module incorporated in it. The identification module comprises an RFID element for storing data relating to the container's identifiers and for communicating such data to an RF communication module in the machine.

In another example, there may be considered a machine comprising a receptacle for a fluid-containing container of the above kind having a base and an opening. The machine comprises a fitting arrangement for fitting with the opening and for drawing fluid therefrom. The receptacle comprises an RF communication module for communication with the RFID element at the container's base to obtain data on the container's identifiers.

According to one example, the identification module is positioned within a recess formed at the base of the container, typically at its center. Such an arrangement allows for repeatedly matched and accurate positioning of the identification module and the RF read/write module upon replacement of the container by the user.

The identification module comprises a shielding element between the RFID element and the juxtaposed portion of the base. As the container is made of metal, such a shielding element prevent refractions of the RF signal and allows for directional reading/transmitting of RF signals to/from the RFID element. The shielding element is typically in the form of a plate but may have other forms, e.g. dome-like, being curved, etc., and is positioned between the RFID element and the juxtaposed portion of the base. The shielding element is made of a ferromagnetic metal/alloy, such as ferrite steel, zinc-ferrite, manganese-zinc-ferrite, barium-ferrite, cobalt-ferrite, etc.

By an embodiment of the current disclosure provided is an identification module according to claim 9, comprising an RFID element and a shield plate for fitting into a recess formed in a metal container. The fitting is such that the shield plate is situated between the RFID element and the wall portion in said recess. Typically the identification module is formed so its external face (namely that face which overlays the RFID element) is made to be flush with the external face of the container when fitted into the recess. The fixing of the identification module into the recess may be by adhering, using an adhesive or by any other suitable means.

The RFID element stores data relating to the container. The data may include an identifier of the authenticity of the container, which may serve, for example, as a measure of quality control. Furthermore, the identifier may be that of the fluid-filling facility in which the container has been filled with the fluid, and may serve a similar purpose. The processor operating within the machine may thus be configured to block operation of the machine where authenticity-indicating data is not read by the RF read/write module; or where the identifier is not that of an authorized fluid-filling facility.

The data stored in the RFID element may also include usage data. For example, the amount of fluid utilized by the machine may be inputted to the element through the RF communication module, and may be used as a counter to gauge the amount of fluid remaining within the container. The utilization of fluid may be gauged either by the number of quantified withdrawals of fluid from the container, or directly based on flow/volume measurement of the fluid withdrawn from the container. Where a used container is accidentally or deliberately introduced into the same or different machine, such usage data may provide an indication on the amount of residual fluid remaining within the container.

In accordance with the current disclosure, the fluid is a pressurized gas, such as CO₂, as already noted above; and in accordance with this embodiment, such a container is typically utilized within a machine for the preparation of a carbonated drink. Such a machine may be for use at home, office, etc.

The metal container is typically constructed of an aluminum-based alloy or steel-based but, as will be appreciated, the invention is not limited to such a container.

### BRIEF DESCRIPTION OF THE DRAWINGS

In order to understand the invention and to see how it may be carried out in practice, embodiments will now be described, by way of non-limiting example only, with reference to the accompanying drawings, in which:
**Fig. 1** is a side view of a container, according to an embodiment of the current disclosure.
**Fig. 2** shows a bottom perspective view of a container of Fig. 1.
**Fig. 3** shows a longitudinal cross-section through the container across the A-A line.
**Fig. 4** is an enlarged view of the section marked B in Fig. 3.
**Fig. 5** is a schematic representation of a machine according to the disclosure herein.

### DETAILED DESCRIPTION OF EMBODIMENTS

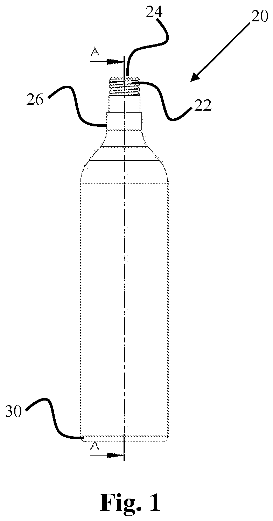

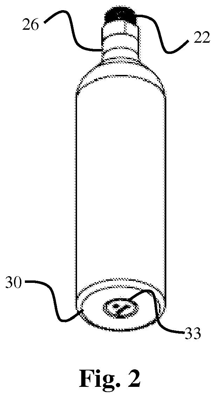

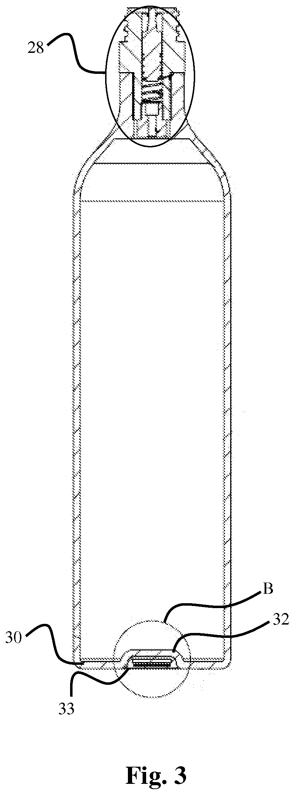

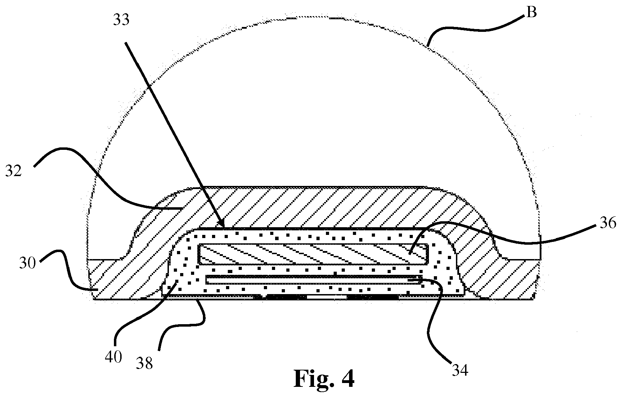

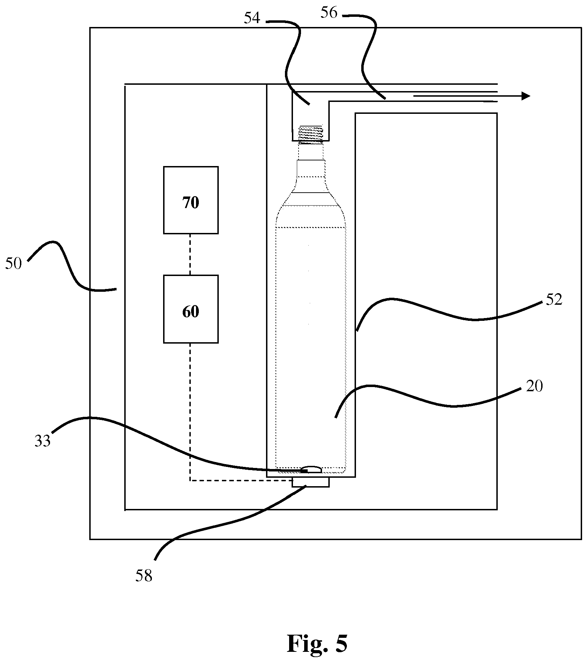

Reference is now made to **Figs. 1-4**, showing a metal container **20** that can contain a fluid, such as pressurized CO₂, adapted for replaceable incorporation into a machine (schematically shown in **Fig. 5**), where the fluid is utilized. In this machine, a fitting element (to be described below with reference to **Fig. 5**) fits threading **22**, formed about the opening **24** of the container's neck **26** for regulated withdrawal of fluid from the container. Fitted within the neck is a flow control mechanism **28** (best seen in **Fig. 3**), for controlling fluid flow.

The container has a base **30** with recess **32** accommodating identification module **33**. The identification module **33** (shown in detail in **Fig, 4**), which may also be referred to by some as "smart card", includes a RFID element **34**, shield plate **36**, made of a ferromagnetic metal or alloy, and a cover **38**. All of these elements are held together and in place, embedded within a matrix **40**, which is a solidified adhesive. The identification module may also comprise a layer of polymeric foam (such as foamed polyurethane, not shown), providing additional cushioning and shock absorbing properties. It is noted that RF waves pass through such a polymeric foam layer without interference, therefore data reading from the "smart card" is not hindered.

In an alternative embodiment, the identification module **33** is separately prepared as a matrix, e.g. made from a polymeric material, in which RFID element **34** and shield plate **36** being embedded therein. The module is shaped so as to fit within recess **32** with the outer face thereof being flush with the bottom face of the base **30**.

The RFID element known *per se* includes a RF transceiver and data storage as well as some components for energizing the element, in response to an RF signal from an RF communication module within the machine.

Reference is now made to **Fig. 5** showing a machine **50** configured for providing a carbonated drink through a dispensing outlet. The machine, which is shown schematically, includes a receptacle **52** for removably receiving a replaceable container **20** which may be that of the embodiments of **Figs. 1-4**, and includes a fitting arrangement **54** for fitting with the neck and through such fitting, permitting gas flow out of the container into tubing **56** within the machine. It should be noted that the flow control arrangement **28** is designed to permit flow only upon engagement of the container's neck with the fitting element.

The machine also includes a RF read/write module **58** which, once the container is in place within the machine, is in juxtaposition to the identification module **33**. The machine further includes a processor **60** linked to the RF read/write module **58** and also linked to a controller **70** which controls operation of the machine. In the absence of data identifying that the container is authentic and being filled in an authorized filling facility, the processor will induce the controller to block operation of the machine.

## Claims

1. A metal container (20) containing a fluid for replaceable incorporation into a machine in which the fluid is utilized, the container having a base (30), the container comprising:
an identification module (33) at the container's base that comprises an RFID element (34) for storing data relating to the container's identifiers and for communicating such data to an RF communication module in the machine;
wherein the identification module comprises a shielding element (36) between the RFID element and the juxtaposed portion of the base, wherein the shielding element is made of a ferromagnetic metal or alloy; and
wherein the fluid is pressurized gas.

2. The container of claim 1, wherein the identification module is positioned within a recess (32) formed at the base.

3. The container of claim 2, wherein said recess is formed at the center of the base.

4. The container of claim 1, wherein the shielding element (36) is in the form of a plate.

5. The container of any one of claims 1-4, wherein the data stored in the RFID element includes (i) an identifier for the fluid-filling facility and/or (ii) usage data.

6. The container of any one of claims 1-5, wherein the pressurized gas is CO₂.

7. The container of any one of claims 1-6, wherein the gas is utilized for the preparation of a carbonated drink.

8. The container of any one of claims 1-7, being an aluminum-based container or a steel-based container.

9. An identification module (33) for fitting into the recess (32) formed in the base (30) of the metal container of any one of claims 1-8, the identification module comprising an RFID element (34) and a shield plate (36, the shield plate being positioned between the RFID element and the juxtaposed portion of said base and being formed such that an external face thereof is made to be flush with the external face of the container (20) when fitted into said recess (32).

## Patentansprüche

1. Ein Fluid enthaltender metallischer Behälter (20) zum austauschbaren Einbau in eine Maschine, in der das Fluid verwendet wird, wobei der Behälter eine Basis (30) aufweist, wobei der Behälter umfasst:
ein Identifikationsmodul (33) an der Basis des Behälters, das ein RFID-Element (34) zum Speichern von die Identifikatoren des Behälters betreffenden Daten und zum Übertragen dieser Daten an ein RF-Kommunikationsmodul in der Maschine umfasst;
wobei
das Identifikationsmodul ein Abschirmelement (36) zwischen dem RFID-Element und dem angrenzenden Abschnitt der Basis umfasst,
das Abschirmelement aus einem ferromagnetischen Metall oder einer ferromagnetischen Legierung hergestellt ist; und
das Fluid Druckgas ist.

2. Behälter nach Anspruch 1, bei dem das Identifikationsmodul innerhalb einer an der Basis ausgebildeten Aussparung (32) positioniert ist.

3. Behälter nach Anspruch 2, bei dem die Aussparung in der Mitte der Basis ausgebildet ist.

4. Behälter nach Anspruch 1, bei dem das Abschirmelement (36) in Form einer Platte ausgebildet ist.

5. Behälter nach einem der Ansprüche 1-4, bei dem die im RFID-Element gespeicherten Daten (i) eine Kennung für die Fluidabfüllanlage und/oder (ii) Nutzungsdaten beinhalten.

6. Behälter nach einem der Ansprüche 1-5, bei dem das Druckgas CO₂ ist.

7. Behälter nach einem der Ansprüche 1-6, bei dem das Gas zur Herstellung eines kohlensäurehaltigen Getränks verwendet wird.

8. Behälter nach einem der Ansprüche 1-7, der ein Behälter auf Aluminiumbasis oder ein Behälter auf Stahlbasis ist.

9. Identifikationsmodul (33) zum Einfügen in die in der Basis (30) des Metallbehälters nach einem der Ansprüche 1-8 ausgebildete Aussparung (32), wobei das Identifikationsmodul ein RFID-Element (34) und eine Abschirmplatte (36) umfasst, wobei die Abschirmplatte zwischen dem RFID-Element und dem angrenzenden Abschnitt der Basis angeordnet ist und so ausgebildet ist, dass eine Außenfläche davon bündig mit der Außenfläche des Behälters (20) ausgebildet ist, wenn es in die Aussparung (32) eingefügt ist.

## Revendications

1. Récipient métallique (20) contenant un fluide destiné à être incorporé de manière remplaçable dans une machine dans laquelle le fluide est utilisé, le récipient ayant une base (30), le récipient comprenant :
un module d'identification (33) au niveau de la base du récipient qui comprend un élément RFID (34) pour stocker des données relatives aux identifiants du récipient et pour communiquer ces données à un module de communication RF dans la machine ;
dans lequel le module d'identification comprend un élément de protection (36) entre l'élément RFID et la partie juxtaposée de la base, où l'élément de protection est réalisé en un métal ou un alliage ferromagnétique ; et
dans lequel le fluide est un gaz sous pression.

2. Récipient de la revendication 1, dans lequel le module d'identification est positionné dans un évidement (32) formé au niveau de la base.

3. Récipient de la revendication 2, dans lequel ledit évidement est formé au centre de la base.

4. Récipient de la revendication 1, dans lequel l'élément de protection (36) se présente sous la forme d'une plaque.

5. Récipient de l'une quelconque des revendications 1 à 4, dans lequel les données stockées dans l'élément RFID comportent (i) un identifiant pour l'installation de remplissage de fluide et/ou (ii) des données d'utilisation.

6. Récipient de l'une quelconque des revendications 1 à 5, dans lequel le gaz sous pression est le CO₂.

7. Récipient de l'une quelconque des revendications 1 à 6, dans lequel le gaz est utilisé pour la préparation d'une boisson gazeuse.

8. Récipient de l'une quelconque des revendications 1 à 7, qui est un récipient à base d'aluminium ou un récipient à base d'acier.

9. Module d'identification (33) destiné à être ajusté dans l'évidement (32) formé dans la base (30) du récipient métallique de l'une quelconque des revendications 1 à 8, le module d'identification comprenant un élément RFID (34) et une plaque de protection (36), la plaque de protection étant positionnée entre l'élément RFID et la partie juxtaposée de ladite base et étant formée de sorte qu'une face externe de celle-ci soit rendue alignée avec la face externe du récipient (20) lorsqu'elle est ajustée dans ledit évidement (32).
